# EUROPÄISCHE PATENTSCHRIFT

(11) **EP 2 965 902 B1**
(45) Veröffentlichungstag und Bekanntmachung des Hinweises auf die Patenterteilung: **16.03.2016**
(21) Anmeldenummer: 14176388.8
(22) Anmeldetag: 09.07.2014
(51) Int. Cl.: B32B 3/06, B32B 3/08, B32B 5/02, B32B 15/20, B32B 15/14, B32B 5/26

(54) **MEHRSCHICHTIGES STRUKTURBAUTEIL, VERFAHREN ZU DESSEN HERSTELLUNG UND VERWENDUNG DAFÜR SOWIE SYSTEM MIT EINEM SOLCHEN STRUKTURBAUTEIL**
MULTILAYER STRUCTURAL COMPONENT, METHOD FOR PRODUCING THE SAME AND USE THEREOF, AND SYSTEM COMPRISING SUCH A STRUCTURAL COMPONENT
COMPOSANT STRUCTURÉ MULTICOUCHES, SON PROCÉDÉ DE FABRICATION ET D'UTILISATION ET SYSTÈME DOTÉ D'UN TEL COMPOSANT STRUCTURÉ

(43) Veröffentlichungstag der Anmeldung: 13.01.2016
(73) Patentinhaber: Hydro Aluminium Rolled Products GmbH, 41515 Grevenbroich (DE); Röchling Automotive SE & Co. KG, 68165 Mannheim (DE)
(72) Erfinder: Denkmann, Volker, 47906 Kempen (DE); Siemen, Andreas, 41363 Jüchen (DE); Uhl, Frank, 67592 Flörsheim-Dalsheim (DE)
(74) Vertreter: Cohausz & Florack

(56) Entgegenhaltungen:
- WO-A1-2013/066173
- WO-A2-2005/002845
- WO-A2-2005/110736
- DE-U1-202014 001 767
- US-A1- 2013 239 507

## Beschreibung

Die Erfindung betrifft ein mehrschichtiges Strukturbauteil mit einer Schichtstruktur umfassend eine Mehrzahl von in einer Stapelrichtung übereinander angeordneter Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst. Weiterhin betrifft die Erfindung ein System mit einem solchen Strukturbauteil, ein Verfahren zu dessen Herstellung sowie Verwendungen dafür.

Insbesondere im Bereich der Konstruktion und Herstellung von Fahrzeugkarosserien sind verschiedene technische Anforderungen und Vorgaben zu erfüllen, die bei der Auswahl der Werkstoffe für die Karosserie berücksichtigt werden müssen. Beispielsweise erfordert die Konstruktion eines Unterbodenbereichs für ein Kraftfahrzeug eine Optimierung hinsichtlich der Geräuschentwicklung, des Luftwiderstandbeiwertes, der Stabilität und des Crash-Verhaltens. Weiterhin sollen die eingesetzten Werkstoffe und Bauteile auch ein möglichst geringes Gewicht aufweisen, um dadurch beispielsweise einen optimierten Kraftstoffverbrauch erreichen zu können.

Im Stand der Technik werden für Unterbodenbereiche von Kraftfahrzeugen beispielsweise Verkleidungen eingesetzt, die aus einem einfachen einteiligen Aufbau aus Polypropylen mit Glasfaserfüllung bestehen, um auf diese Weise eine gute Schallisolation und einen verbesserten Luftwiderstandsbeiwert c_{w} zu erreichen. Hierzu werden im Stand der Technik beispielsweise folgende Werkstoffe eingesetzt: langfaserverstärkte Thermoplaste (LFT), glasmattenverstärkte Thermoplaste (GMT) oder LWRT-Werkstoffe.

Diese Verkleidungen werden zusammen mit Formblechkonstruktionen verwendet, die den eigentlichen Unterboden des Kraftfahrzeugs bilden und die notwendige Steifigkeit, ein ausreichend gutes Crash-Verhalten und die konstruktiven Anbindungspunkte an die übrige Karosserie-Rahmenkonstruktion zur Verfügung stellen. Derartige Bodenkonstruktionen werden in zusätzlichen Arbeitsschritten zum Innenraum hin ergänzt durch mehrere Materialschichten mit akustischen, optischen und haptischen Funktionen.

Diese kombinierten Systeme aus Faserverbund-Verkleidung, Formblechkonstruktion und zusätzlichen Bodenschichten erfordern jedoch einen nicht unerheblichen Montageaufwand. Weiterhin sind viele dieser Systeme aufgrund der verhältnismäßig schweren Formblechkonstruktionen auch hinsichtlich ihres Gewichts optimierungsbedürftig.

Die WO 2013/066173 A1 beschreibt ein verbessertes Faser-Metall-Laminat. Die WO 2005/002845 A2 bescheibt ein Laminat mit lokaler Verstärkung. Die WO 2005/110736 A2 beschreibt ein Aluminium-Faser Laminat. Die DE 20 2014 001767 U1 beschreibt Verbundelemente mit akustischen und/oder thermischen Dämmeigenschaften. Die US 2013/0239507 A1 beschreibt Verfahren und ein System zur Verbindung von Strukturpaneelen.

Ausgehend von diesem Stand der Technik liegt der vorliegenden Erfindung die Aufgabe zugrunde, ein Bauteil zur Verfügung zu stellen, insbesondere für den Einsatz in einem Kraftfahrzeug, das bei relativ geringem Gewicht verschiedene Funktionalitäten miteinander vereint, insbesondere hinsichtlich seiner mechanischen Eigenschaften wie Biege-, Torsions- und Drucksteifigkeit, Crash-Verhalten und Korrosionsstabilität, andererseits hinsichtlich konstruktiver Eigenschaften, insbesondere zur Schallisolation, Wärmedämmung und Reduzierung des c_{w}-Werts, und das sich auf einfache Weise mit einem weiteren Bauteil, wie zum Beispiel einer Kraftfahrzeugkarosserie, verbinden lässt.

Diese Aufgabe wird bei einem mehrschichtigen Strukturbauteil mit einer Schichtstruktur umfassend eine Mehrzahl von in einer Stapelrichtung übereinander angeordneter Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst, erfindungsgemäß zumindest teilweise dadurch gelöst, dass das Strukturbauteil ein Anschlusselement aus Metall umfasst, wobei das Anschlusselement einen

Verankerungsbereich aufweist, der zwischen zwei in Stapelrichtung benachbarten Schichten der Schichtstruktur eingebettet ist, und wobei das Anschlusselement einen zumindest teilweise außerhalb der Schichtstruktur angeordneten Anschlussbereich zum Verbinden des Strukturbauteils mit einem weiteren Bauteil aufweist.

Im Rahmen der Erfindung wurde erkannt, dass durch die Kombination mindestens einer Aluminiumschicht aus Aluminium oder einer Aluminiumlegierung und mindestens einer Kunststofffaserverbundschicht aus einem einen Kunststoff und ein anorganisches Fasermaterial umfassenden Kunststofffasergemisch ein Bauteil hergestellt werden kann, welches einerseits gute konstruktive Eigenschaften und andererseits gute Eigenschaften hinsichtlich der Wärmedämmung und Schallisolierung aufweist. Weiterhin wurde erkannt, dass dieses Strukturbauteil durch ein integriertes Anschlusselement aus Metall in einfacher Weise mit weiteren Bauteilen verbunden werden kann, so dass eine Integration des Strukturbauteils in andere Strukturen, beispielsweise in eine Kraftfahrzeugkarosserie, problemlos möglich ist.

Die Schichtstruktur umfasst eine Mehrzahl von in einer Stapelrichtung übereinander angeordneten Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst. Die Schichtstruktur kann grundsätzlich eine beliebige Anzahl übereinander angeordneter Schichten umfassen. Vorzugsweise weist die Schichtstruktur jedoch zumindest zwei Faserschichten und mindestens zwei Aluminiumschichten auf.

Der Verankerungsbereich des Anschlusselements ist vorzugsweise flach ausgebildet, beispielsweise blech- bzw. laschenförmig, so dass der Verankerungsbereich flach zwischen zwei Schichten der Schichtstruktur in diese eingebettet werden kann. Ein flacher Verankerungsbereich weist eine große'Oberfläche zur Verbindung mit den Schichten der Schichtstruktur auf und erhält zudem den grundsätzlichen Schichtaufbau der Schichtstruktur.

Die einzelnen Schichten der Schichtstruktur und der Verankerungsbereich des Anschlusselements sind vorzugsweise fest und insbesondere flächig untereinander verbunden, so dass sie ein fest zusammenhängendes Strukturbauteil bilden. Vorzugsweise sind die Schichten und der Verankerungsbereich stoffschlüssig miteinander verbunden.

Die Schichtstruktur weist in Stapelrichtung vorzugsweise einen symmetrischen Aufbau auf, insbesondere mit zwei mittig angeordneten, benachbarten Faserschichten, zwischen denen der Verankerungsbereich des Strukturbauteils eingebettet ist. Durch einen symmetrischen Aufbau der Schichtstruktur kann verhindert werden, dass sich das Strukturbauteil beispielsweise bei Temperaturänderungen verzieht.

Die oben genannte Aufgabe wird weiterhin erfindungsgemäß zumindest teilweise gelöst durch ein System umfassend ein zuvor beschriebenes Strukturbauteil sowie ein weiteres Bauteil, wobei der Anschlussbereich des Strukturbauteils und das weitere Bauteil derart ausgebildet sind, dass das Bauteil mit dem Anschlussbereich des Strukturbauteils verbindbar ist. Indem der Anschlussbereich des Strukturbauteils und das weitere Bauteil auf diese Weise aneinander angepasst werden, wird die Montage des Strukturbauteils an dem Bauteil vereinfacht.

Der Anschlussbereich der Strukturbauteils und das Bauteil können beispielsweise korrespondierende Verbindungsmittel aufweisen wie zum Beispiel korrespondierende Bohrungen für eine Schraub- oder Nietverbindungen oder korrespondierende Flansche für eine Löt- oder Schweißverbindung.

Die zuvor genannte Aufgabe wird weiterhin erfindungsgemäß zumindest teilweise gelöst durch ein Verfahren zur Herstellung eines zuvor beschriebenen Strukturbauteils, bei dem die Schichten der Schichtstruktur und das Anschlusselement derart in einem Formwerkzeug in Stapelrichtung übereinander angeordnet werden, dass der Verankerungsbereich des Anschlusselements zwischen zwei in Stapelrichtung benachbarten Schichten der Schichtstruktur eingebettet ist, insbesondere zwischen zwei Faserschichten, und bei dem die Schichten und das Anschlusselement zumindest im Verankerungsbereich zu einem Strukturbauteil heißverpresst werden.

Unter dem Heißverpressen wird verstanden, dass die Schichten der Schichtstruktur vor oder beim Verpressen derart erwärmt werden, dass das thermoplastische Bindemittel der Faserschichten erweicht. Auf diese Weise wird der Verankerungsbereich des Anschlusselements in die Schichtstruktur eingefügt, so dass er nach dem Aushärten des Bindemittels fest mit den umgebenden Schichten verbunden ist. Das Heissverpressen erfolgt vorzugsweise in einem Temperaturbereich von 170°C bis 230°C.

Das Verpressen erfolgt zu diesem Zweck zumindest im Verankerungsbereich des Anschlusselements. Der Schichtaufbau kann auch über den Verankerungsbereich hinaus, insbesondere im Wesentlichen vollflächig verpresst werden.

Der Anschlussbereich des Anschlusselements bleibt beim Verpressen vorzugsweise unverpresst, um eine Deformation des Anschlussbereichs zu vermeiden bzw. um die zum Verpressen erforderliche Kraft zu verringern.

Die zuvor genannte Aufgabe wird erfindungsgemäß weiterhin zumindest teilweise gelöst durch die Verwendung des zuvor beschriebenen Strukturbauteils oder des zuvor beschriebenen Systems als Bauelement im Automobilbau, im Schienenfahrzeugbau, im Schiffsbau, im Maschinenbau, im Flugzeugbau oder im Baubereich.

Im Automobilbau können die zuvor beschriebenen Strukturbauteile beispielsweise als Bodenplatte oder Stirnwand eingesetzt werden, sowie als Schottwände, Ladeböden und Dachaufbauten. Insbesondere können in die Strukturbauteile hierzu auch Querträger integriert werden, z.B. zur Installation von Sitzschienen. Weist das herzustellende Fahrzeug keinen Tunnelbereich auf, können die als Untermodul verwendeten Strukturbauteile sehr flach ausgebildet werden. Bei Fahrzeugen mit einem Tunnelbereich kann ein Tunnel aus Kunststoff an zwei Halbmodulen angeschlossen werden, wobei die Halbmodule aus einem Strukturbauteil bestehen.

Im Bereich des Schienenverkehrs können die Strukturbauteile insbesondere als Bodenplatte, oder für Wand- und Dachkonstruktionen von Schienenfahrzeugen eingesetzt werden. Im Flugzeugbau und Schiffbau können die Strukturbauteile ebenfalls für Boden-, oder Wand- und Dachkonstruktionen verwendet werden.

Im Maschinenbau können die Strukturbauteile insbesondere als bzw. für Maschineneinhausungen zur Lärmreduzierung eingesetzt werden.

Im Baubereich können die Strukturbauteile beispielsweise als Elemente für den Hochwasserschutz, als dekorative Wandelemente oder für Lärmschutzwände eingesetzt werden.

Vorzugsweise ist das Strukturbauteil für eine der zuvor genannten Verwendungen ausgebildet. Beispielsweise kann das Strukturbauteil als Kraftfahrzeugunterboden ausgebildet sein, der mit dem mindestens einen Verbindungselement an die Kraftfahrzeugkarosserie montiert werden kann.

Im Folgenden werden verschiedene Ausführungsformen des Strukturbauteils, des Verfahrens zu dessen Herstellung sowie dessen Verwendung und des Systems beschrieben, wobei die einzelnen Ausführungsformen jeweils in beliebiger Kombination und in Bezug auf alle genannten Lösungen (Strukturbauteil, System, Verfahren, Verwendung) anwendbar sind.

Bei einer Ausführungsform weist die mindestens eine Aluminiumschicht eine Dicke im Bereich von 0,02 bis 1 mm, vorzugsweise von 0,03 bis 0,7 mm, insbesondere von 0,04 bis 0,2 mm auf. Wenn das Strukturbauteil mehrere Aluminiumschichten umfasst, so weist vorzugsweise jede dieser Aluminiumschichten eine Dicke in den zuvor genannten Bereichen auf. Vorzugsweise weisen die äußeren der Aluminiumschichten eine Dicke im Bereich von 0,04 mm bis 1,0 mm auf, um dem Strukturbauteil größere Steifigkeit zu verleihen. Mit den zuvor beschriebenen Dickenbereichen für die mindestens eine Aluminiumschicht oder mehreren Aluminiumschichten können bei dem Strukturbauteil vorteilhafte mechanische Eigenschaften erreicht werden, ohne dass es durch eine übermäßige Schichtdicke zu einem hohen Gewicht des Strukturbauteils käme.

Bei einer weiteren Ausführungsform besteht die mindestens eine Aluminiumschicht aus einer Legierung vom Typ 3xxx, 5xxx, 6xxx oder 8xxx (Typenbezeichnung nach DIN EN 573). Diese Legierungstypen weisen hinsichtlich ihrer Festigkeit und Verformbarkeit gute Eigenschaften auf, so dass ein konstruktiv belastbares Strukturbauteil zur Verfügung gestellt werden kann. Alternativ können für die mindestens eine Aluminiumschicht aber auch andere Legierungen, insbesondere vom Typ 1xxx verwendet werden.

Bei einer weiteren Ausführungsform des Strukturbauteils weist die mindestens eine Faserschicht eine Dicke im Bereich von 1 bis 12 mm, vorzugsweise von 3 bis 10 mm, insbesondere von 6 bis 8 mm auf. Wenn das Strukturbauteil mehrere Faserschichten umfasst, so weist vorzugsweise jede dieser Faserschichten eine Dicke in den zuvor genannten Bereichen auf. Mit den zuvor beschriebenen Dickenbereichen für die mindestens eine Faserschicht bzw. mehreren Faserschichten wird ein vorteilhafter Kompromiss zwischen guten mechanischen Eigenschaften des Strukturbauteils einerseits und einer kompakten und leichten Bauweise andererseits erreicht.

Bei einer Ausführungsform weist die mindestens eine Faserschicht bzw. weisen mehrere, insbesondere alle Faserschichten der Schichtstruktur ein anorganisches Fasermaterial auf, insbesondere eines der folgenden Fasermaterialien oder eine Mischung daraus: Glasfasern, Mineralfasern, Carbonfasern. Als thermoplastisches Bindemittel wird vorzugsweise ein Polyolefin wie Polypropylen (PP) oder Polyethylen (PE), Polyethylenterephthalat (PET), ein Polyamid (PA), ein Polyester oder eine Mischung daraus verwendet.

Der Bindemittelanteil der mindestens einen Faserschicht, vorzugsweise mehrerer oder aller Faserschichten der Schichtstruktur beträgt vorzugsweise zwischen 50 und 70 Massenprozent. Der Fasermaterial-Anteil liegt vorzugsweise entsprechend bei 30 bis 50 Massenprozent. Mit diesen Verhältnissen wird eine hinreichende Festigkeit der Faserschichten erreicht.

Um die Fasern des Fasermaterials durch das Bindemittel miteinander verbinden und in einer gewünschten dreidimensionalen Form aushärten zu können, ohne die Struktur der Fasern an sich zu stark zu verändern, weist das Fasermaterial bevorzugt eine höhere Schmelz- oder Erweichungstemperatur auf als das thermoplastische Bindemittel.

Besonders bevorzugt kann als Faserschicht eine Mäterialkombination zum Einsatz kommen, die üblicherweise als Kern-Schicht in einem für Kraftfahrzeug-Verkleidungen bekannten LWRT-Material (low-weight reinforced thermoplastic) verwendet wird, beispielsweise in dem als Seeberlite bekannten Material von Röchling Automotive. Anstelle von bzw. zusätzlich zu den bei den LWRT-Materialien zur Abdeckung der Kernschichten üblicherweise verwendeten Deckschichten werden bei dem Strukturbauteil vorzugsweise Aluminiumschichten verwendet, um die Faserschichten beidseitig abzudecken.

Bei einer weiteren Ausführungsform weist die mindestens eine Faserschicht jeweils wenigstens abschnittsweise eine Porosität von wenigstens 75 % auf. Unter der Porosität eines Materials das Verhältnis aus dem Hohlraumvolumen zu dem Gesamtvolumen des Materials verstanden.

Neben dem geringen Gewicht liegt ein Vorteil der Porosität der Faserschichten darin, dass diese geräuschisolierend wirken, so dass auf eine zusätzliche Schallisolierung des Strukturbauteils verzichtet werden kann.

Bei der Herstellung des Strukturbauteils, insbesondere mit dem zuvor beschriebenen Verfahren, werden die einzelnen Schichten der Schichtanordnung sowie der Verankerungsbereich des Anschlusselements üblicherweise heißverpresst.

Beim Heißverpressen kann das Strukturbauteil abschnittweise kompaktiert werden, wobei in den kompaktierten oder teilkompaktierten Abschnitten die Porosität der Faserschichten auch kleiner als 75 Prozent sein kann, solange die Faserschichten in dem fertig hergestellten Strukturbauteil wenigstens abschnittsweise, vorzugsweise vorwiegend, eine Porosität von wenigstens 75 Prozent aufweisen.

Beispielsweise kann bei einer Faserschicht mit einem Flächengewicht von etwa 500g/m² und mit einem Glasfaser-Anteil von etwa 40 Massenprozent sowie einem Polypropylen-Anteil von etwa 60 Massenprozent als thermoplastisches Bindemittel bei einer Verpressung der Faserschicht auf eine Dicke von etwa 0,4 mm eine (in den jeweiligen kompaktierten Abschnitten) vollständige Kompaktierung (Porosität etwa Null) erreicht werden, bei einer Verpressung auf 0,8 mm eine Porosität von etwa 50 Prozent, bei einer Verpressung auf 1,6 mm eine Porosität von etwa 75 Prozent und bei einer Verpressung auf 3,2 mm eine Porosität von etwa 87,5 Prozent.

Aus Gründen der Geräuschisolation und des Gewichts ist bevorzugt, dass wenigstens eine Faserschicht wenigstens abschnittsweise, vorzugsweise vorwiegend oder vollständig eine Porosität zwischen 85 % und 95 % aufweist, wobei vorzugsweise mehrere oder alle Faserschichten wenigstens abschnittsweise die vorgenannte Porosität haben.

Um die geräuschisolierende Eigenschaften der Faserschicht besser ausnutzen zu können, kann vorgesehen sein, dass wenigstens eine Aluminiumschicht, die in der Stapelrichtung am weitesten außen liegt, eine Mikroperforation aufweist. Bevorzugt weisen beide in der Stapelrichtung am weitesten außen liegende Aluminiumschichten eine solche Mikroperforation auf. Auf diese Weise können Schallwellen durch die mikroperforierte Aluminiumschicht in die benachbarte Faserschicht geleitet werden, wo sie dann stark absorbiert werden.

Vorzugsweise ist eine mittlere Aluminiumschicht der Schichtstruktur, d.h. eine nicht am weitesten außen liegende Aluminiumschicht, als geschlossene Schicht ausgebildet, um eine Wasserdichtigkeit des Strukturbauteils zu gewährleisten. Eine solche Schicht weist insbesondere keine Mikroperforation auf.

Bei einer weiteren Ausführungsform umfasst die Schichtstruktur neben Aluminiumschichten und Faserschichten noch eine oder mehrere Schichten aus anderen Materialien und/oder mit einer anderen Struktur, insbesondere als äußere Schicht (Deckschicht). Auf diese Weise können die Eigenschaften des Strukturbauteils insbesondere an der Oberfläche bedarfsgemäß eingestellt werden.

Beispielsweise kann die Schichtstruktur eine Deckschicht aus einem porösen Material aufweisen, wie zum Beispiel ein Faservlies oder eine Schaum-Matte, die fest mit wenigstens einer der übrigen Schichten der Schichtstruktur verbunden ist. Die Schichtstruktur kann insbesondere eine Deckschicht aus textilem Material, beispielsweise in der Art eines Teppichbodens aufweisen.

Ist das Strukturbauteil als Kraftfahrzeugboden ausgebildet, so können beispielsweise auf einer im eingebauten Zustand der Fahrbahn zugewandten Außenseite des Strukturbauteils ein steinschlagresistentes Vliesmaterial und auf der dem Fahrgastinnenraum zugewandten Außenseite ein Teppich oder eine Dekorschicht vorgesehen sein. Auf diese Weise wird ein Strukturbauteil zur Verfügung gestellt, dass unmittelbar als Unterboden beispielsweise eines Kraftfahrzeugs eingesetzt werden kann, ohne dass nachträglich weitere Schichten auf das Strukturbauteil aufgebracht werden müssen.

Die Schichtstruktur kann als Deckschicht auch eine lackierte Metallschicht oder eine Dekorschicht aufweist, die mit mindestens einer Schicht der Schichtstruktur verbunden ist. Weiterhin kann die Schichtstruktur als Korrosionsschutz auch eine Kunststoffschicht als Deckschicht aufweisen oder von einer solchen umgeben sein.

Durch eine Anpassung der Anzahl und der Dicken der Aluminiumschichten und/oder der Faserschichten, des Fasermaterialanteils in den Faserschichten, der Art der Mikroperforation der Aluminiumschichten sowie der Wahl der äußeren Schichten (z.B. Teppich, akustisches Flies, dekorativ lackiertes Aluminium, etc.) können verschiedene Funktionalitäten des Strukturbauteils bedarfsgemäß eingestellt werden, insbesondere in Bezug auf das Gewicht, die Biege-, Torsions- und Drucksteifigkeit, das Crash-Verhalten, die Korrosionsstabilität, die akustische Wirksamkeit, die Wärmedämmung, das optische Erscheinungsbild und einen geringen c_{w}-Wert.

Das Strukturbauteil kann grundsätzlich als ebene Platte ausgebildet sein. Bevorzugt ist es jedoch dreidimensional verformt, beispielsweise um die Biegesteifigkeit des Bauteils in bestimmten Richtungen zu vergrößern, oder um die Form des Bauteils an die Umgebung (z. B. an die Karosserie eines Kraftfahrzeugs) anzupassen, in der das Bauteil eingesetzt werden soll. Zu diesem Zweck können die gestapelten Schichten unter Druck und ggf. Wärmeeinwirkung verpresst und in die gewünschte dreidimensionale Form gebracht werden.

Bei einer weiteren Ausführungsform ist das Anschlusselement aus Aluminium oder einer Aluminiumlegierung. Vorzugsweise handelt es sich bei dem Anschlusselement um ein Aluminiumprofil, insbesondere um ein extrudiertes Aluminiumprofil. Mit einem Aluminiumprofil lässt sich insbesondere gegenüber einem Stahlprofil Gewicht einsparen. Weiterhin kann durch Extrusion auf einfache Weise ein Aluminiumprofil mit den gewünschten Formen, insbesondere mit der gewünschten Form des Verankerungsbereichs und des Anschlussbereichs hergestellt werden.

Alternativ kann das Anschlusselement auch aus Magnesium oder einer Magnesiumlegierung bestehen. Insbesondere kann es sich bei dem Anschlusselement um ein Magnesiumprofil handeln. Mit Anschlusselementen aus Magnesium oder einer Magnesiumlegierung lassen sich ähnliche Leichtbauvorteile erreichen wie bei einem Anschlusselement aus Aluminium oder einer Aluminiumlegierung.

Alternativ kann das Anschlusselement jedoch auch aus Stahl oder einer Stahllegierung bestehen. Insbesondere kann es sich bei dem Anschlusselement um ein Stahlprofil handeln.

Bei einer weiteren Ausführungsform ist die mindestens eine Aluminiumschicht der Schichtstruktur und/oder der Verankerungsbereich des Anschlusselements mit einer Haftvermittlerschicht versehen sind, insbesondere mit einem PP-, PA- oder Polyester-Haftvermittler. Auf diese Weise wird die Verbindung zwischen der Aluminiumschicht bzw. dem Verankerungsbereich des Anschlusselements und der Kunststofffaserverbundschicht verbessert bzw. verstärkt.

Beim Herstellungsverfahren erfolgt die Beschichtung der Aluminiumschicht vorzugsweise mittels eines Coil-Coating-Verfahrens, kann aber beispielweise auch durch Tauchen oder Spritzlackieren mit anschließender Trocknung erfolgen. Die Beschichtung des Verankerungsbereichs des Anschlusselements erfolgt vorzugsweise durch Tauchen oder Spritzlackieren mit anschließender Trocknung.

Bei einer weiteren Ausführungsform weist die Schichtstruktur mindestens zwei Faserschichten auf und der Verankerungsbereich des Anschlusselements ist zwischen zwei Faserschichten eingebettet. Mit den Bindemittel enthaltenden Faserschichten kann der Verankerungsbereich fest in der Schichtstruktur verankert werden, so dass das Anschlusselement auch bei großer mechanischer Belastung sicher in der Schichtstruktur verbleibt.

Bei einer weiteren Ausführungsform weist der Anschlussbereich des Anschlusselements ein Halbschalenprofil auf. Auf diese Weise kann das Anschlusselement beispielsweise mit einem weiteren Halbschalenprofil verbunden werden, so dass sich aus den beiden Halbschalenprofilen ein Hohlprofil ergibt. Ein solches Hohlprofil weist bei geringem Gewicht eine hohe Stabilität auf. Zum Verbinden des Halbschalenprofils des Anschlusselements an ein weiteres Halbschalenprofil weist das Halbschalenprofil Verbindungsbereiche auf, die dazu ausgebildet sind, das Halbschalenprofil mit einem zweiten Halbschalenprofil zu einem Hohlprofil zu verbinden.

Bei einer weiteren Ausführungsform weist das Anschlusselement an zwei Seiten des Anschlussbereichs, vorzugsweise an zwei gegenüberliegenden Seiten, jeweils einen flachen Verankerungsbereich auf, der zwischen jeweils zwei Schichten der Schichtstruktur eingebettet ist. Beispielsweise kann das Anschlusselement als Halbschalenprofil mit beidseitig vorgesehenen Verankerungsbereichen ausgebildet sein.

Auf diese Weise kann das Verbindungselement mittig in eine Schichtstruktur eingebettet werden. Die Schichtstruktur kann mehrteilig ausgebildet sein mit einem ersten Schichtstrukturteil und einem zweiten Schichtstrukturteil, wobei der erste Verankerungsbereich zwischen zwei Schichten des ersten Schichtstrukturteils und der zweite Verankerungsbereich zwischen zwei Schichten des zweiten Schichtstrukturteils eingebettet ist. Alternativ kann die Schichtstruktur auch einteilig ausgebildet sein, so dass die Schichten zwischen denen die Verankerungsbereiche der beiden Anschlusselemente eingebettet sind, untereinander oder über andere Schichten der Schichtstruktur miteinander verbunden sind.

Bei einer weiteren Ausführungsform umfasst das Strukturbauteil ein zumindest teilweise außerhalb der Schichtstruktur angeordnetes Hohlprofil, in dem mindestens eine Energie-, Medien- oder Signalleitung angeordnet ist. Beispielsweise kann das Strukturbauteil als Kraftfahrzeugunterboden ausgebildet sein. Im Hohlprofil kann in diesem Fall beispielsweise eine Batterieleitung, ein Kabelbaum, eine Bremsleitung, eine Luftleitung oder eine Kraftstoffleitung angeordnet sein. Das Hohlprofil wird insbesondere zumindest teilweise vom Anschlussbereich des Anschlusselements gebildet.

Es wurde erkannt, dass auf diese Weise ein zumindest teilweise oder vollständig mit Leitungen bestücktes Strukturbauteil zur Verfügung gestellt werden kann, dass unmittelbar an seinem Bestimmungsort installiert werden kann, ohne dass die Leitungen erst in dem Strukturbauteil verlegt werden müssen. Beispielsweise kann auf diese Weise ein mit Leitungen bestückter Kraftfahrzeugunterboden zur Verfügung gestellt werden, der direkt an die übrige Karosserie angeschlossen werden kann.

Bei einer Ausführungsform des Verfahrens wird mindestens eine Faserschicht der Schichtstruktur in Form eines Faserkuchens im Formwerkzeug angeordnet, wobei der Faserkuchen anorganische Fasern und Fasern aus thermoplastischem Kunststoff umfasst. Beim Heißverpressen des Faserkuchens schmelzen die Fasern aus thermoplastischem Kunststoff zumindest teilweise oder im Wesentlichen vollständig auf und bilden eine Kunststofffschmelze. Beim Wiedererstarren der Kunststoffschmelze, beispielsweise während oder nach dem Heißverpressen des Faserkuchens, ergibt sich dann eine zusammenhängende Faserschicht. Die Fasern aus thermoplastischem Kunststoff dienen also als thermoplastisches Bindemittel, das sich beim Heißverpressen der Schicht erweicht und die anorganischen Fasern bindet. Auf diese Weise ergibt sich eine Schicht geringer Dichte, die jedoch eine große Stabilität aufweist.

Der Faserkuchen besteht vorzugsweise im Wesentlichen aus anorganischen Fasern und Fasern aus thermoplastischem Kunststoff, insbesondere zu mindestens 80 %, vorzugsweise zu mindestens 95 %. Beispielsweise kann der Faserkuchen ein Gemisch aus Polypropylenfasern und Glasfasern umfassen.

Der Faserkuchen kann beispielsweise dadurch bereitgestellt werden, dass zunächst ein Faserkuchen aus Fasern aus thermoplastischem Kunststoff bereitgestellt wird, auf den dann anorganische Fasern wie zum Beispiel Glasfasern aufgebracht werden. Die anorganischen Fasern können dann mit den Fasern aus thermoplastischem Kunststoff gemischt werden, beispielsweise durch mechanisches Einarbeiten der anorganischen Fasern in den Faserkuchen. Nach dem Mischen der Fasern aus thermoplastischem Kunststoff und der anorganischen Fasern kann der Faserkuchen optional homogenisiert und zu einem Vlies verarbeitet, beispielsweise verwoben werden. Ein solches Vlies kann beispielsweise eine Dicke von 50 bis 80 mm aufweisen. Das Homogenisieren des Faserkuchens kann insbesondere durch Walken und/oder Nadeln des Vlieses erfolgen.

Der Faserkuchen kann auch zunächst in einem separaten Werkzeug heißverpresst und dann als vorverpresste Faserschicht in dem Formwerkzeug angeordnet werden.

Bei einem weiteren Ausführungsbeispiel des Verfahrens wird das Strukturbauteil nach dem Heißpressen derart erwärmt, dass sich die Dicke mindestens einer Faserschicht zumindest abschnittsweise vergrößert.

In der Faserschicht liegt zumindest ein Teil der Fasern nicht vollständig gestreckt, sondern zumindest teilweise gekrümmt vor, so dass diese gekrümmten Fasern in der Faserschicht unter Spannung stehen. Beim Erwärmen nach dem Heißpressen erweicht ein Teil des thermoplastischen Bindemittels bzw. schmilzt auf, so dass sich die die gekrümmten Fasern neu ausrichten, wobei sich in der Faserschicht kleine Hohlräume bilden und sich auf diese Weise einerseits die Dicke der Faserschicht, als auch deren Porosität erhöht.

Derartige Faserschichten zeichnen sich einerseits durch gute Festigkeitseigenschaften bei relativ geringem Gewicht und andererseits durch gute akustische, insbesondere gute schallisolierende Eigenschaften aus. Weiterhin können die Eigenschaften solcher Faserschichten bei der Herstellung gezielt eingestellt werden, so dass auf diese Weise die für eine spezielle Anwendung gewünschten Materialeigenschaften eingestellt werden können.

Bei einer Ausführungsform des Verfahrens wird mindestens eine Schicht bzw. werden vorzugsweise mehrere oder alle Schichten der Schichtstruktur in einem Vorformwerkzeug vorgeformt, bevor sie in dem Formwerkzeug angeordnet werden. Die vorgeformte Schicht bzw. die vorgeformten Schichten können dann in dem Formwerkzeug übereinander gestapelt und zu einem Strukturbauteil heißverpresst werden. Durch das Vorverpressen kann eine bessere Maßhaltigkeit und Homogenität des Strukturbauteils erreicht werden. Weiterhin kann bei hohen Umformgraden ein Reißen der betreffenden Schicht verhindert werden.

Zur Verbesserung der Homogenität des Schichtaufbaus können für ein dreidimensional verformtes Strukturbauteil die Aluminiumschichten auch ohne die Faserschichten (vorzugsweise einzeln) vorgeformt werden. Die Aluminiumschichten werden vorzugsweise jeweils in eine Form vorgeformt, die der gewünschten dreidimensionalen Form des Strukturbauteils entspricht bzw. ähnelt oder eine Vorform dazu darstellt, bevor sie zusammen mit den Faserschichten zu dem Strukturbauteil heißverpresst werden.

Eine weitere Ausführungsform des Verfahrens ist dadurch gekennzeichnet, dass die Schichten der Schichtstruktur in unverpresstem Zustand in dem Formwerkzeug angeordnet werden, dass die Schichten in dem Formwerkzeug zu einem Strukturbauteil heißverpresst werden, wobei das Strukturbauteil bezogen auf die Zielgeometrie des Strukturbauteils zumindest bereichsweise eine geringere Dicke aufweist, dass das Formwerkzeug auf die Zielgeometrie des herzustellenden Strukturbauteils eingestellt wird und dass das Strukturbauteil im Formwerkzeug derart erwärmt wird, dass das Strukturbauteil durch zumindest abschnittsweise Erhöhung der Dicke mindestens einer Faserschicht die Zielgeometrie des Strukturbauteils einnimmt.

Auf diese Weise kann das Strukturbauteil in einem Prozesszyklus und in einem Formwerkzeug hergestellt werden, wodurch die Herstellung des Strukturbauteils vereinfacht und rationalisiert wird. Insbesondere können bei dieser Ausführungsform Werkzeuge zum Vorverpressen von Faserschichten eingespart werden.

Bei einer weiteren Ausführungsform des Verfahrens werden die Aluminiumschichten in Form von Blechen aus Aluminium oder einer Aluminiumlegierung in dem Formwerkzeug angeordnet. Die Aluminiumbleche können beispielsweise durch Walzen eines Aluminiumbands und Konfektionierung des Aluminiumbands zu Aluminiumblechen zur Verfügung gestellt werden. Bei einer Mehrzahl von Aluminiumschichten können die Schichten aus gleichen oder unterschiedlichen Aluminiumlegierungen bestehen. Weiterhin können die eine oder mehreren Aluminiumschichten in einer Presse vorkonfektioniert und/oder vorgeformt werden, insbesondere abhängig von der gewünschten Form des Strukturbauteils. Die eine oder mehreren Aluminiumschichten können dem Formwerkzeug, beispielsweise einer Doppelbandpresse, auch bandförmig zugeführt und dort angeordnet werden. Auf diese Weise ist auch eine bandförmige Herstellung der Strukturbauteile möglich.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1a - d: ein Ausführungsbeispiel eines Herstellungsverfahrens für ein mehrschichtiges Strukturbauteil sowie ein Ausführungsbeispiel für ein entsprechend hergestelltes Strukturbauteil,
- Fig. 2: eine alternative Ausgestaltung des in den Fig. 1a - d dargestellten Verfahrens mit einem zweiten Ausführungsbeispiel eines entsprechend hergestellten Strukturbauteils,
- Fig. 3: ein drittes Ausführungsbeispiel des mehrschichtigen Strukturbauteils,
- Fig. 4: ein viertes Ausführungsbeispiel des mehrschichtigen Strukturbauteils,
- Fig. 5: ein fünftes Ausführungsbeispiel des mehrschichtigen Strukturbauteils,
- Fig. 6: ein sechstes Ausführungsbeispiel des mehrschichtigen Strukturbauteils, und
- Fig. 7: ein siebtes Ausführungsbeispiel des mehrschichtigen Strukturbauteils.

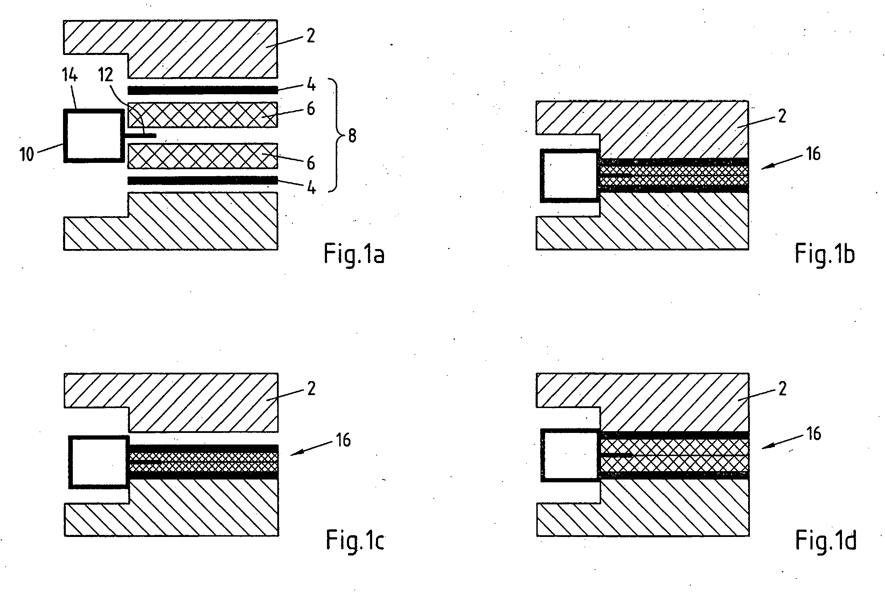

Die Fig. 1a - d zeigen vier Schritte eines Ausführungsbeispiels eines Herstellungsverfahrens zur Herstellung eines mehrschichtigen Strukturbauteils.

In einem in Fig. 1a dargestellten ersten Schritt werden in einem als Presse ausgebildeten Formwerkzeug 2 zwei Aluminiumschichten 4 aus einer Aluminiumlegierung sowie zwei Faserschichten 6 aus einem Fasermaterial und einem thermoplastischen Bindemittel in einer Stapelrichtung zu einer Schichtstruktur 8 übereinander angeordnet. Zudem wird ein Anschlusselement 10 derart angeordnet, dass ein laschenartiger Verankerungsbereich 12 des Anschlusselements 10 zwischen zwei in Stapelrichtung benachbarten Faserschichten 6 der Schichtstruktur 8 eingebettet ist. Das Anschlusselement 10 weist neben dem Verankerungsbereich 12 noch einen Anschlussbereich 14 auf, der die Form eines Hohlprofils aufweist und außerhalb der Schichtstruktur 8 angeordnet ist.

Bei diesem Ausführungsbeispiel liegen die Faserschichten 6 im ersten Schritt in Form eines Faserkuchens aus anorganischen Fasern wie z. B. Glasfasern und Fasern aus einem thermoplastischen Kunststoff wie z. B. Polyethylen vor. Die Fasern aus thermoplastischem Kunststoff nehmen hierbei die Funktion des thermoplastischen Bindemittels ein. Bei einem alternativen Ausführungsbeispiel können die Faserschichten 6 auch in Form von vorverpressten Faserkuchen in dem Formwerkzeug 2 angeordnet werden.

Die Aluminiumschichten 4 sind jeweils auf der der benachbarten Faserschicht 6 zugewandten Seite mit einer Haftvermittlerschicht versehen, um die Haftung zwischen der Aluminiumschicht 4 und der Faserschicht 6 zu verbessen. Ebenso ist das Anschlusselement 10 im Verankerungsbereich 12 mit einer Haftvermittlerschicht versehen, um die Haftung zwischen dem Anschlusselement 10 und den beiden umgebenden Faserschichten 6 zu erhöhen. Bei dem Haftvermittler kann es sich beispielsweise um einen PP- oder PE-Haftvermittler handeln.

In einem zweiten, in Fig. 1b dargestellten Verfahrensschritt werden die Schichten der Schichtstruktur 8 und der eingebettete Verankerungsbereich 12 des Anschlusselements 10 in dem Formwerkzeug 2 heißverpresst. Beim Heißverpressen wird die Temperatur in den Faserschichten 6 auf einen Wert oberhalb der Erweichungstemperatur der Fasern aus thermoplastischem Kunststoff erhöht, so dass diese zumindest teilweise aufschmelzen. Weiterhin presst das Formwerkzeug die Schichtstruktur 8 mit dem eingebetteten Verankerungsbereich 12 zusammen, so dass die einzelnen Schichten der Schichtstruktur 8 und der Verankerungsbereich 12 beim Erstarren des thermoplastischen Kunststoffs fest miteinander verbunden werden und ein mehrschichtiges Strukturbauteil 16 ergeben. Das Formwerkzeug 2 ist im Bereich des Anschlussbereichs 14 des Anschlusselements 10 derart ausgebildet, dass der Anschlussbereich nicht mitverpresst wird. Weiterhin ist das Formwerkzeug 2 in diesem Verfahrensschritt so eingerichtet, dass es die Schichtstruktur 8 auf eine Geometrie verpresst, die zumindest bereichsweise eine geringere Dicke aufweist als die Zielgeometrie für das Strukturbauteil 16.

In einem dritten, in Fig. 1c dargestellten Verfahrensschritt wird das Formwerkzeug nach dem Heißverpressen auf die Zielgeometrie des Strukturbauteils 16 eingestellt. Das Strukturbauteil 16 wird dann erneut auf einen Wert oberhalb der Erweichungstemperatur des thermoplastischen Kunststoffs der Faserschichten erwärmt. Durch diese Erwärmung schmilzt das thermoplastische Bindemittel in den Faserschichten 6 zumindest teilweise wieder auf, so dass sich die anorganischen Fasern in diesen Schichten neu ausrichten können. Hierbei entstehen Hohlräume in den Faserschichten 6, so dass sich die Faserschichten 6 in ihrer Dicke ausdehnen, bis sie wie in Fig. 1d dargestellt die durch das Formwerkzeug 2 vorgegebene Zielgeometrie eingenommen haben.

Bei der Ausdehnung der Faserschichten 6 erhöht sich gleichzeitig die Porosität dieser Schichten, so dass die spezifische Dichte des Strukturbauteils 16 reduziert wird. Das fertige Strukturbauteil 16 kann schließlich nach dem Wiedererstarren des thermoplastischen Kunststoffs in den Faserschichten 6 dem Formwerkzeug entnommen und bestimmungsgemäß verwendet werden.

Das Strukturbauteil 16 kann eine plattenförmige Schichtstruktur aufweisen oder auch eine Schichtstruktur mit komplexer Geometrie. Beispielsweise kann die Schichtstruktur 8 während des Heißverpressens im Formwerkzeug 2 umgeformt werden. Zu diesem Zweck kann das Formwerkzeug 2 beispielsweise Ausnehmungen oder Auswölbungen aufweisen, um der Schichtstruktur 8 beim Heißverpressen eine bestimmte Form zu geben.

Es ist weiterhin möglich, einzelne Schichten der Schichtstruktur 8 in entsprechenden Vorformwerkzeugen separat vorzuformen, um sie dann bereits vorgeformt im Formwerkzeug 2 zu der Schichtstruktur 8 anzuordnen. Insbesondere können die Faserschichten 6 im vorverpressten Zustand in dem Formwerkzeug 2 angeordnet werden.

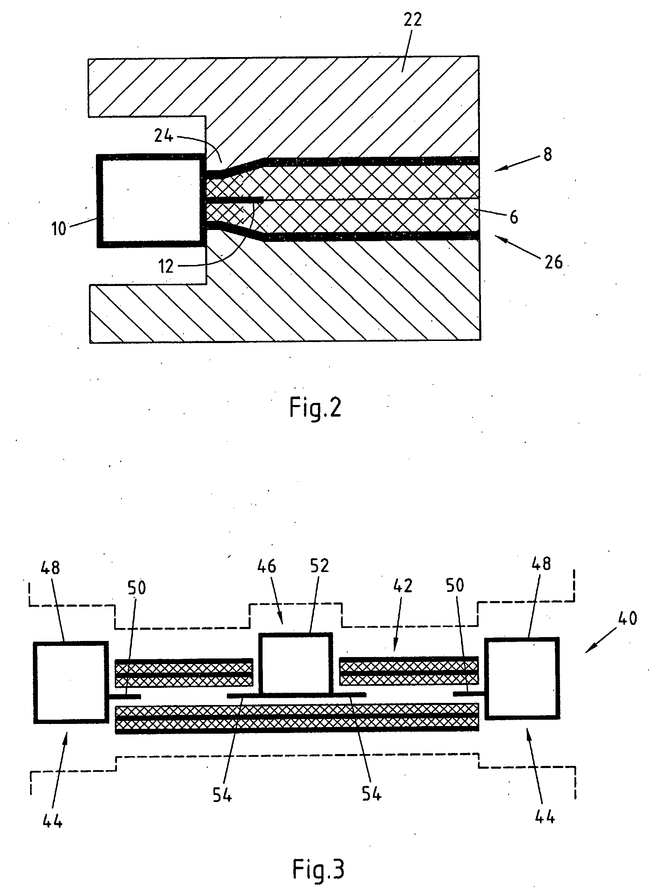

Fig. 2 zeigt eine alternative Ausgestaltung des in den Fig. 1a - d gezeigten Verfahrens. Bei diesem Ausführungsbeispiel wird ein Formwerkzeug 22 verwendet, welches Vorsprünge 24 aufweist, die in den Bereichen angeordnet sind, in denen der Verankerungsbereich 12 des Anschlusselements 10 positioniert werden soll.

Bei dem in Fig. 2 dargestellten Verfahrensschritt, der dem in Fig. 1d gezeigten Verfahrensschritt entspricht, führt dies dazu, dass sich die Faserschichten 6 im Bereich des Verankerungsbereichs 12 beim Wiedererwärmen nach dem Heißverpressen nur geringfügig ausdehnen, so dass sich die Porosität der Faserschichten 6 in diesem Bereich nur geringfügig ändert. Die geringere Porosität in diesem Bereich ist in Fig. 2 durch die engermaschige Kreuzschraffur veranschaulicht.

Auf diese Weise weisen die Faserschichten 6 im Bereich des Verankerungsbereichs 12 eine erhöhte Dichte auf, die bei dem auf diese Weise hergestellten Strukturbauteil 26 zu einer Verstärkung der Verbindung zwischen der Schichtstruktur 8 und dem Verankerungsbereich 12 führt.

Im Folgenden werden verschiedene Ausführungsbeispiele von Strukturbauteilen beschrieben, die mit dem zuvor beschriebenen Verfahren oder einem vergleichbaren Verfahren herstellbar sind. Die einzelnen Komponenten der jeweiligen Strukturbauteile (Schichtstrukturen, Anschlusselemente) sind beim fertigen Strukturbauteil jeweils fest miteinander verbunden. Zwecks übersichtlicherer Darstellung sind die einzelnen Komponenten in den Figuren 3 bis 7 jedoch zum Teil in unverbundenem Zustand dargestellt. Die Geometrie der fertigen, vollständig verbundenen Strukturbauteile ist aus diesen Figuren jedoch ohne weiteres ersichtlich.

Fig. 3 zeigt ein drittes Ausführungsbeispiel eines Strukturbauteils 40 mit einer Schichtstruktur 42, zwei jeweils seitlich vorgesehenen Anschlusselementen 44 sowie einem mittig in das Strukturbauteil 40 integrierten Anschlusselement 46. Die Anschlusselemente 44 weisen jeweils einen Hohlprofil-förmigen Anschlussbereich 48 sowie einen laschenförmigen Verankerungsbereich 50 auf, der zwischen zwei Faserschichten 6 der Schichtstruktur 42 eingebettet ist. Das Anschlusselement 46 weist ebenfalls einen Hohlprofil-förmigen Anschlussbereich 52 sowie zwei gegenüberliegende laschenförmige Verankerungsbereiche 54 auf, die jeweils zwischen zwei Faserschichten 6 der Schichtstruktur 42 eingebettet sind. Ein solches Anschlusselement 46 kann folglich auch innerhalb einer Schichtstruktur eingebettet werden.

Die Hohlprofil-förmigen Anschlussbereiche 48, 52 verleihen dem Strukturbauteil 40 eine hohe Steifigkeit und erlauben die Montage an andere Baugruppen. Beispielsweise kann das Strukturbauteil 40 als Kraftfahrzeugunterboden ausgestaltet sein, der mit den Anschlussbereichen 48, 52 an einer Fahrzeugkarosserie befestigt werden kann.

Bei der Herstellung des in Fig. 3 gezeigten Strukturbauteils 40 wird vorzugsweise ein Formwerkzeug verwendet, dessen Geometrie an die Lage der Anschlusselemente 44, 46 angepasst ist, so dass diese beim Heißverpressen nicht mitverpresst werden. In Fig. 3 sind beispielhaft die Konturen eines geeigneten Formwerkzeugs als gestrichelte Linien dargestellt.

Die als Hohlprofil ausgebildeten Anschlussbereiche 48, 52 der Anschlusselemente 42, 44 können als Kanal für Energie-, Signal- und/oder Medienleitungen dienen. Das Strukturbauteil 40 kann daher vorzugsweise mit bereits integrierten Energie-, Signal-und/oder Medienleitungen bereitgestellt werden, so dass der Montageaufwand reduziert wird. Insbesondere kann ein solches Strukturbauteil 40 als mit Energie-, Signal- und/oder Medienleitungen bestückter Kraftfahrzeugunterboden ausgebildet werden.

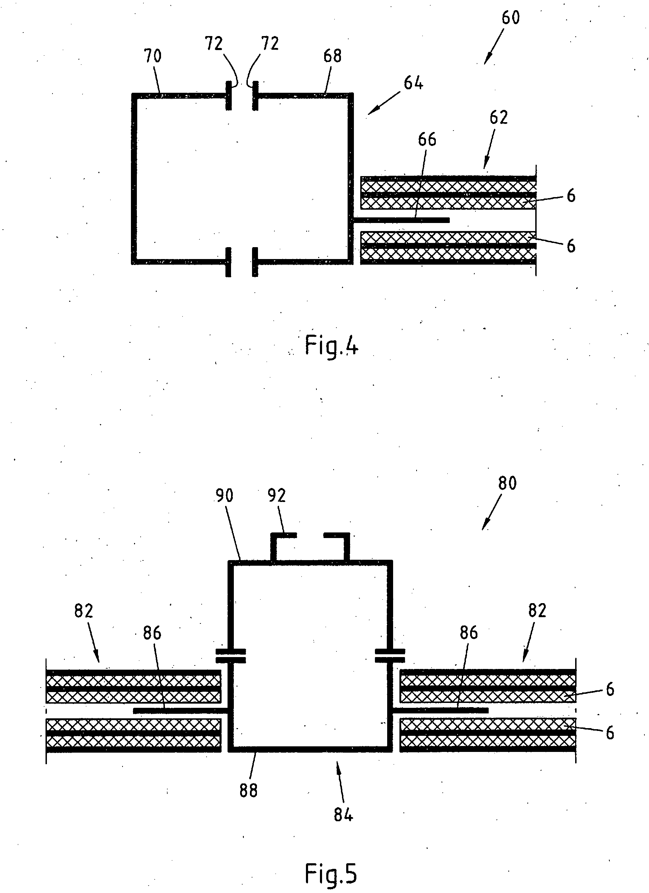

Fig. 4 zeigt ein viertes Ausführungsbeispiel eines Strukturbauteils 60 mit einer Schichtstruktur 62 und einem seitlichen Anschlusselement 64. Das Anschlusselement 64 weist einen laschenartigen Verankerungsbereich 66 auf, der zwischen zwei Faserschichten 6 der Schichtstruktur 62 eingebettet ist. Der Anschlussbereich 68 des Anschlusselements 64 ist in Form eines Halbschalenprofils ausgebildet und dazu eingerichtet, mit einem Halbschalenprofil eines weiteren Bauteils 70 zu einem Hohlprofil verbunden werden. Zu diesem Zweck weisen der Anschlussbereich 68 und das Halbschalenprofil des Bauteils 70 einander entsprechende Verbindungsbereiche 72 auf, in denen die Halbschalenprofile beispielsweise miteinander verschweißt, verschraubt oder vernietet werden können. Ein solches Strukturbauteil 60 kann beispielsweise als Kraftfahrzeugunterboden ausgebildet sein und mit den Anschlussbereichen 68 mit einem Halbschalenprofil der Kraftfahrzeugkarosserie verbunden werden.

Fig. 5 zeigt ein fünftes Ausführungsbeispiel eines Strukturbauteils 80 mit einer zweiteilig ausgebildeten Schichtstruktur 82, und einem zwischen den beiden Teilen der Schichtstruktur 82 angeordneten Anschlusselement 84. Das Anschlusselement 84 weist zwei gegenüberliegende laschenförmige Verankerungsbereiche 86 auf, die jeweils zwischen zwei Faserschichten eines Teils der Schichtstruktur 82 eingebettet sind. Der Anschlussbereich 88 ist Halbschalenprofil-artig ausgebildet und kann mit einem weiteren Halbschalenprofil-förmigen Bauteil 90 zu einem Hohlprofil verbunden werden. Das auf diese Weise entstehende Hohlprofil kann vorteilhaft zur Führung von Energie-, Signal- und/oder Medienleitungen verwendet werden. Die durch Halbschalenprofil-artige Gestaltung des Anschlussbereichs 88 kann die Integration solcher Energie-, Signal- und/oder Medienleitungen vereinfacht werden. So können diese Leitungen in das Halbschalenprofile eingelegt werden, bevor dieses mit dem weiteren Bauteil 80 zu einem Hohlprofil verbunden wird.

In dem in Fig. 5 dargestellten Ausführungsbeispiel ist das Strukturbauteil 80 als Kraftfahrzeugunterboden ausgestaltet. Das weitere Bauteil 90 kann vorzugsweise weitere funktionale Elemente für den Kraftfahrzeuginnenraum aufweisen, wie zum Beispiel eine Schienenführung 90 für einen Fahrzeugsitz. Auf diese Weise lassen sich derartige funktionale Elemente direkt in den Kraftfahrzeugboden integrieren.

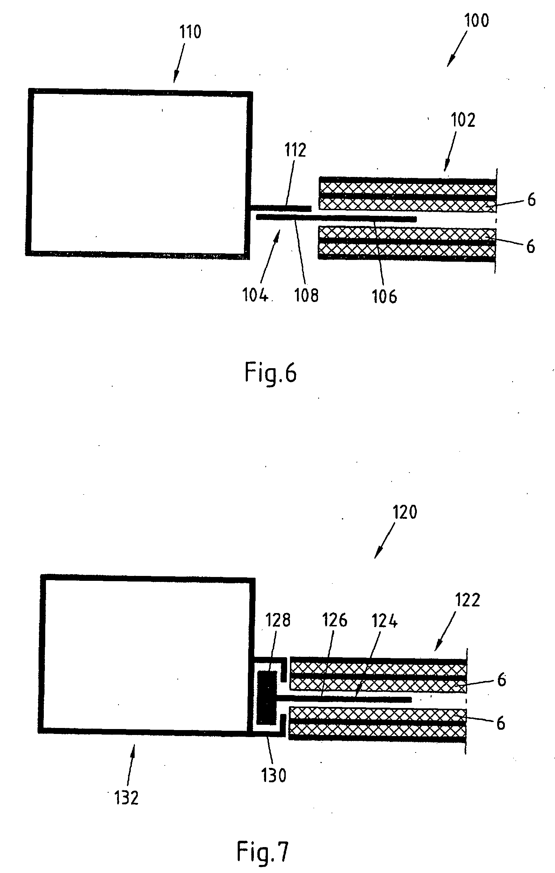

Fig. 6 zeigt ein sechstes Ausführungsbeispiel eines Strukturbauteils 100 mit einer Schichtstruktur 102 und einem Anschlusselement 104. Sowohl der zwischen zwei Faserschichten 6 der Schichtstruktur 102 eingebettete Verankerungsbereich 106 als auch der Anschlussbereich 108 des Anschlusselements 104 sind laschenförmig ausgebildet. Beispielsweise kann das Anschlusselement 104 als einfaches Flachprofil ausgebildet sein. Im Anschlussbereich 108 kann ein solches Anschlusselement 104 beispielsweise durch Schweißen, Nieten, Schrauben etc. mit einem weiteren Bauteil 110 verbunden werden, das eine für die Verbindung vorgesehene Lasche 112 aufweist.

Fig. 7 zeigt ein siebtes Ausführungsbeispiel des Strukturbauteils 120 mit einer Schichtstruktur 122 und einem Anschlusselement 124, das einen zwischen zwei Faserschichten 6 der Schichtstruktur 122 eingebetteten Verankerungsbereich 126 aufweist. Der Anschlussbereich 128 des Anschlusselements 124 ist so ausgebildet, dass er mit einer Führungsschiene 130 eines weiteren Bauteils 132 derart zusammenwirken kann, dass das Strukturbauteil 120 gegenüber dem weiteren Bauteil 132 verschiebbar ist. Auf diese Weise können Strukturbauteile bereitgestellt werden, die in beweglicher Weise mit einem weiteren Bauteil verbunden werden können.

Grundsätzlich sind auch andere Ausgestaltungen des Anschlussbereichs denkbar, um dem Strukturbauteil die gewünschte Funktionalität bzw. die gewünschte Anbindbarkeit an ein weiteres Bauteil wie zum Beispiel an eine Kraftfahrzeugkarosserie zu verleihen.

## Patentansprüche

1. Mehrschichtiges Strukturbauteil (16, 26, 40, 60, 80, 100, 120)
- mit einer Schichtstruktur (8, 42, 62, 82, 102, 122) umfassend eine Mehrzahl von in einer Stapelrichtung übereinander angeordneter Schichten (4, 6),
- wobei die Schichtstruktur (8, 42, 62, 82, 102, 122) mindestens eine Faserschicht (6) aus einem Fasermaterial und einem thermoplastischen Bindemittel und mindestens eine Aluminiumschicht (4) aus Aluminium oder einer Aluminiumlegierung umfasst,
**dadurch gekennzeichnet,**
- **dass** das Strukturbauteil (16, 26, 40, 60, 80, 100, 120) ein Anschlusselement (10, 42, 44, 46, 64, 84, 104, 124) aus Metall umfasst, wobei das Anschlusselement (10, 42, 44, 46, 64, 84, 104, 124) einen Verankerungsbereich (12, 50, 54, 66, 86, 106, 126) aufweist, der zwischen zwei in Stapelrichtung benachbarten Schichten (4, 6) der Schichtstruktur (8, 42, 62, 82, 102, 122) eingebettet ist, und wobei das Anschlusselement (10, 42, 44, 46, 64, 84, 104, 124) einen zumindest teilweise außerhalb der Schichtstruktur (8, 42, 62, 82,102, 122) angeordneten Anschlussbereich (14, 48, 52, 68, 88, 48, 68, 88, 108,128) zum Verbinden des Strukturbauteils (16, 26, 40, 60, 80, 100, 120) mit einem weiteren Bauteil (70,80, 90, 110, 132) aufweist.

2. Strukturbauteil nach Anspruch 1,
**dadurch gekennzeichnet,**
**dass** das Anschlusselement (10, 42, 44, 46, 64, 84, 104, 124) ein Aluminiumprofil, insbesondere ein extrudiertes Aluminiumprofil, ein Stahlprofil, oder ein Magnesiumprofil ist.

3. Strukturbauteil nach Anspruch 1 oder 2,
**dadurch gekennzeichnet,**
**dass** die mindestens eine Aluminiumschicht der Schichtstruktur (8, 42, 62, 82, 102, 122) und/oder der Verankerungsbereich (12, 50, 54, 66, 86, 106, 126) des Anschlusselements (10, 42, 44, 46, 64, 84, 104, 124) mit einer Haftvermittlerschicht versehen sind, insbesondere mit einem PP-, PA- oder Polyester-Haftvermittler.

4. Strukturbauteil nach einem der Ansprüche 1 bis 3,
**dadurch gekennzeichnet,**
**dass** die Schichtstruktur (8, 42, 62, 82, 102, 122) mindestens zwei Faserschichten (6) aufweist und dass der Verankerungsbereich (12, 50, 54, 66, 86, 106, 126) des Anschlusselements (10, 42, 44, 46, 64, 84, 104, 124) zwischen zwei Faserschichten (6) eingebettet ist.

5. Strukturbauteil nach einem der Ansprüche 1 bis 4,
**dadurch gekennzeichnet,**
**dass** die mindestens eine Faserschicht (6) jeweils wenigstens abschnittsweise eine Porosität von wenigstens 75 % aufweist.

6. Strukturbauteil nach einem der Ansprüche 1 bis 5,
**dadurch gekennzeichnet,**
**dass** der Anschlussbereich (14, 48, 52, 68, 88, 48, 68, 88, 108, 128) des Anschlusselements (10, 42, 44, 46, 64, 84,104, 124) ein Halbschalenprofil aufweist, wobei das Halbschalenprofil vorzugsweise Verbindungsbereiche (72) aufweist, die dazu ausgebildet sind, das Halbschalenprofil mit einem zweiten Halbschalenprofil zu einem Hohlprofil zu verbinden.

7. Strukturbauteil nach einem der Ansprüche 1 bis 6,
**dadurch gekennzeichnet,**
**dass** das Anschlusselement (10, 42,44, 46, 64, 84,104, 124) an zwei Seiten des Anschlussbereichs (14, 48, 52, 68, 88, 48, 68, 88, 108, 128), vorzugsweise an zwei gegenüberliegenden Seiten, jeweils einen flachen Verankerungsbereich (12, 50, 54, 66, 86, 106, 126) aufweist, der zwischen jeweils zwei Schichten (4, 6) der Schichtstruktur (8, 42, 62, 82, 102, 122) eingebettet ist.

8. Strukturbauteil nach einem der Ansprüche 1 bis 7,
**dadurch gekennzeichnet,**
**dass** das Strukturbauteil (16, 26, 40, 60, 80, 100, 120) ein zumindest teilweise außerhalb der Schichtstruktur (8, 42, 62, 82, 102, 122) angeordnetes Hohlprofil umfasst, in dem mindestens eine Energie-, Medien- oder Signalleitung angeordnet ist.

9. System umfassend
- ein Strukturbauteil (16, 26, 40, 60, 80, 100, 120) nach einem der Ansprüche 1 bis 8,
- ein weiteres Bauteil (70, 80, 90, 110, 132),
- wobei der Anschlussbereich (14, 48, 52, 68, 88, 48, 68, 88, 108, 128) des Strukturbauteils (16, 26, 40, 60, 80, 100, 120) und das weitere Bauteil (70, 80, 90, 110,132) derart ausgebildet sind, dass das Bauteil (70, 80, 90, 110, 132) mit dem Anschlussbereich (14, 48, 52, 68, 88, 48, 68, 88, 108,128) des Strukturbauteils (16, 26, 40, 60, 80,100,120) verbindbar ist.

10. Verfahren zur Herstellung eines Strukturbauteils (16, 26, 40, 60, 80, 100, 120) nach einem der Ansprüche 1 bis 8,
- bei dem die Schichten (4, 6) der Schichtstruktur (8, 42, 62, 82, 102, 122) und das Anschlusselement (10, 42, 44, 46, 64, 84, 104, 124) derart in einem Formwerkzeug (2, 22) in Stapelrichtung übereinander angeordnet werden, dass der Verankerungsbereich (12, 50, 54, 66, 86, 106, 126) des Anschlusselements (10, 42, 44, 46, 64, 84, 104, 124) zwischen zwei in Stapelrichtung benachbarten Schichten (4, 6) der Schichtstruktur (8,42, 62, 82, 102, 122) eingebettet ist, insbesondere zwischen zwei Faserschichten (6), und
- bei dem die Schichten (4, 6) und das Anschlüsselement (10, 42, 44, 46, 64, 84, 104, 124) zumindest im Verankerungsbereich (12, 50, 54, 66, 86, 106,126) zu einem Strukturbauteil (16, 26, 40, 60, 80,100, 120) heißverpresst werden.

11. Verfahren nach Anspruch 10,
**dadurch gekennzeichnet,**
**dass** mindestens eine Faserschicht (6) der Schichtstruktur (8,42, 62, 82, 102, 122) in Form eines Faserkuchens im Formwerkzeug (2, 22) angeordnet wird, wobei der Faserkuchen anorganische Fasern und Fasern aus thermoplastischem Kunststoff umfasst.

12. Verfahren nach Anspruch 10 oder 11,
**dadurch gekennzeichnet,**
**dass** das Strukturbauteil (16, 26, 40, 60, 80,100, 120) nach dem Heißpressen derart erwärmt wird, dass sich die Dicke mindestens einer Faserschicht (6) zumindest abschnittsweise vergrößert.

13. Verfahren nach einem der Ansprüche 10 bis 12,
**dadurch gekennzeichnet,**
**dass** mindestens eine Schicht (4, 6) der Schichtstruktur (8, 42, 62, 82, 102,122) in einem Vorformwerkzeug vorgeformt wird, bevor sie in dem Formwerkzeug (2, 22) angeordnet wird.

14. Verfahren nach einem der Ansprüche 10 bis 13,
**dadurch gekennzeichnet,**
- **dass** die Schichten (4, 6) der Schichtstruktur (8, 42, 62, 82, 102, 122) in unverpresstem Zustand in dem Formwerkzeug (2, 22) angeordnet werden,
- **dass** die Schichten (4, 6) in dem Formwerkzeug (2, 22) zu einem Strukturbauteil (16, 26, 40, 60, 80, 100, 120) heißverpresst werden, wobei das Strukturbauteil (16, 26, 40, 60, 80, 100, 120) bezogen auf die Zielgeometrie des Strukturbauteils (16, 26, 40, 60, 80, 100, 120) zumindest bereichsweise eine geringere Dicke aufweist,
- **dass** das Formwerkzeug (2, 22) auf die Zielgeometrie des herzustellenden Strukturbauteils (16, 26, 40, 60, 80, 100, 120) eingestellt wird und
- **dass** das Strukturbauteil (16, 26, 40, 60, 80, 100, 120) im Formwerkzeug (2, 22) derart erwärmt wird, dass das Strukturbauteil (16, 26, 40, 60, 80, 100, 120) durch zumindest abschnittsweise Erhöhung der Dicke mindestens einer Faserschicht (6) die Zielgeometrie des Strukturbauteils (16, 26, 40, 60, 80, 100, 120) einnimmt.

15. Verwendung eines Strukturbauteils (16, 26, 40, 60, 80, 100, 120) nach einem der Ansprüche 1 bis 8 oder eines Systems nach Anspruch 9 als Bauelement im Automobilbau, im Schienenfahrzeugbau, im Schiffsbau, im Maschinenbau, im Flugzeugbau oder im Baubereich.

## Claims

1. A multilayer structural component (16, 26, 40, 60, 80, 100, 120)
- with a layer structure (8, 42, 62, 82, 102, 122) comprising a multitude of layers (4, 6), arranged on top of each other in a stacking direction,
- wherein the layer structure (8, 42, 62, 82, 102, 122) comprises at least one fibre layer (6) of a fibre material and of a thermoplastic binder and at least one aluminium layer (4) of aluminium or an aluminium alloy, **characterised in that**
- the structural component (16, 26, 40, 60, 80, 100, 120) comprises a connection element (10, 42, 44, 46, 64, 84, 104, 124) of metal, wherein the connection element (10, 42, 44, 46, 64, 84, 104, 124) comprises an anchoring region (12, 50, 54, 66, 86, 106, 126) embedded between two layers (4, 6) of the layer structure (8, 42, 62, 82, 102, 122), which layers are adjacent in the stacking direction, and wherein the connection element (10, 42, 44, 46, 64, 84, 104, 124) comprises a connection region (14, 48, 52, 68, 88, 48, 68, 88, 108, 128), which is at least partly arranged outside the layer structure (8, 42, 62, 82, 102, 122), for connecting the structural component (16, 26, 40, 60, 80, 100, 120) to a further component (70, 80, 90, 110, 132).

2. The structural component according to claim 1,
**characterised in that**
the connection element (10, 42, 44, 46, 64, 84, 104, 124) is an aluminium profile, in particular an extruded aluminium profile, a steel profile, or a magnesium profile.

3. The structural component according to claim 1 or 2,
**characterised in that**
the at least one aluminium layer of the layer structure (8, 42, 62, 82, 102, 122) and/or the anchoring region (12, 50, 54, 66, 86, 106, 126) of the connection element (10, 42, 44, 46, 64, 84, 104, 124) comprise a bonding agent layer, in particular a PP-, PA- or polyester bonding agent.

4. The structural component according to any one of claims 1 to 3,
**characterised in that**
the layer structure (8, 42, 62, 82, 102, 122) comprises at least two fibre layers (6), and **in that** the anchoring region (12, 50, 54, 66, 86, 106, 126) of the connection element (10, 42, 44, 46, 64, 84, 104, 124) is embedded between two fibre layers (6).

5. The structural component according to any one of claims 1 to 4,
**characterised in that**
the at least one fibre layer (6) in each case comprises at least in some sections a porosity of at least 75%.

6. The structural component according to any one of claims 1 to 5,
**characterised in that**
the connection region (14, 48, 52, 68, 88, 48, 68, 88, 108, 128) of the connection element (10, 42, 44, 46, 64, 84, 104, 124) comprises a half-shell profile, wherein the half-shell profile preferably comprises connection regions (72) that are designed to connect the half-shell profile to a second half-shell profile so as to form a hollow profile.

7. The structural component according to any one of claims 1 to 6,
**characterised in that**
the connection element (10, 42, 44, 46, 64, 84, 104, 124) on two sides of the connection region (14, 48, 52, 68, 88, 48, 68, 88, 108, 128), preferably on two opposite sides, in each case comprises a flat anchoring region (12, 50, 54, 66, 86, 106, 126) that is in each case embedded between two layers (4, 6) of the layer structure (8, 42, 62, 82, 102, 122).

8. The structural component according to any one of claims 1 to 7,
**characterised in that**
the structural component (16, 26, 40, 60, 80, 100, 120) comprises a hollow profile that at least in some sections is arranged outside the layer structure (8, 42, 62, 82, 102, 122), in which hollow profile at least one energy line, media line or signal line is arranged.

9. A system comprising
- a structural component (16, 26, 40, 60, 80, 100, 120) according to any one of claims 1 to 8,
- a further component (70, 80, 90, 110, 132),
- wherein the connection region (14, 48, 52, 68, 88, 48, 68, 88, 108, 128) of the structural component (16, 26, 40, 60, 80, 100, 120) and the further component (70, 80, 90, 110, 132) are designed in such a manner that the component (70, 80, 90, 110, 132) can be connected to the connection region (14, 48, 52, 68, 88, 48, 68, 88, 108, 128) of the structural component (16, 26, 40, 60, 80, 100, 120).

10. A method for manufacturing a structural component (16, 26, 40, 60, 80, 100, 120) according to any one of claims 1 to 8,
- in which the layers (4, 6) of the layer structure (8, 42, 62, 82, 102, 122) and the connection element (10, 42, 44, 46, 64, 84, 104, 124) are arranged, on top of each other in the stacking direction, in such a manner in a mould tool (2, 22) that the anchoring region (12, 50, 54, 66, 86, 106, 126) of the connection element (10, 42, 44, 46, 64, 84, 104, 124) is embedded between two layers (4, 6), adjacent in the stacking direction, of the layer structure (8, 42, 62, 82, 102, 122), in particular between two fibre layers (6), and
- in which the layers (4, 6) and the connection element (10, 42, 44, 46, 64, 84, 104, 124) at least in the anchoring region (12, 50, 54, 66, 86, 106, 126) are hot-pressed to form a structural component (16, 26, 40, 60, 80, 100, 120).

11. The method according to claim 10,
**characterised in that**
at least one fibre layer (6) of the layer structure (8, 42, 62, 82, 102, 122) is arranged in the form of a fibre mat in the mould tool (2, 22), wherein the fibre mat comprises inorganic fibres and fibres made from thermoplastic plastic.

12. The method according to claim 10 or 11,
**characterised in that**
the structural component (16, 26, 40, 60, 80, 100, 120) after hot-pressing is heated to such an extent that the thickness of at least one fibre layer (6) increases at least in some sections.

13. The method according to any one of claims 10 to 12,
**characterised in that**
at least one layer (4, 6) of the layer structure (8, 42, 62, 82, 102, 122) is preformed in a preforming tool before it is arranged in the mould tool (2, 22).

14. The method according to any one of claims 10 to 13, **characterised in that**
- the layers (4, 6) of the layer structure (8, 42, 62, 82, 102, 122) are arranged in their non-pressed state in the mould tool (2, 22),
- the layers (4, 6) are hot-pressed in the mould tool (2, 22) to form a structural component (16, 26, 40, 60, 80, 100, 120), wherein the structural component (16, 26, 40, 60, 80, 100, 120) at least in some regions is less thick relative to the target geometry of the structural component (16, 26, 40, 60, 80, 100, 120),
- the mould tool (2, 22) is set to the target geometry of the structural component (16, 26, 40, 60, 80, 100, 120) to be manufactured, and
- the structural component (16, 26, 40, 60, 80, 100, 120) is heated in the mould tool (2, 22) in such a manner that the structural component (16, 26, 40, 60, 80, 100, 120) as a result of an increase in the thickness, at least in some sections, of at least one fibre layer (6) assumes the target geometry of the structural component (16, 26, 40, 60, 80, 100, 120).

15. The use of a structural component (16, 26, 40, 60, 80, 100, 120) according to any one of claims 1 to 8 or of a system according to claim 9 as a component part in automotive engineering, in rail vehicle engineering, in shipbuilding, in mechanical engineering, in aircraft construction or in the construction sector.

## Revendications

1. Pièce structurelle multicouches (16, 26, 40, 60, 80, 100, 120)
- comprenant une structure de couches (8, 42, 62, 82, 102, 122) comprenant une pluralité de couches (4, 6) disposées l'une sur l'autre dans un sens d'empilement,
- sachant que la structure de couches (8, 42, 62, 82, 102, 122) comprend au moins une couche de fibres (6) dans un matériau de fibres et un liant thermoplastique et au moins une couche d'aluminium (4) en aluminium ou en alliage d'aluminium,
**caractérisée en ce que**
- la pièce structurelle multicouches (16, 26, 40, 60, 80, 100, 120) comprend un élément de raccordement (10, 42, 44, 46, 64, 84, 104, 124) en métal, sachant que l'élément de raccordement (10, 42, 44, 46, 64, 84, 104, 124) présente une zone d'ancrage (12, 50, 54, 66, 86, 106, 126) qui est enchâssée entre deux couches (4, 6) de la structure de couches (8, 42, 62, 82, 102, 122) voisines dans le sens d'empilement, et sachant que l'élément de raccordement (10, 42, 44, 46, 64, 84, 104, 124) présente une zone de raccordement (14, 48, 52, 68, 88, 48, 68, 88, 108, 128) disposée au moins partiellement hors de la structure de couches (8, 42, 62, 82, 102, 122) pour relier la pièce structurelle (16, 26, 40, 60, 80, 100, 120) à une pièce supplémentaire (70, 80, 90, 110, 132).

2. Pièce structurelle selon la revendication 1,
**caractérisée en ce que**
l'élément de raccordement (10, 42, 44, 46, 64, 84, 104, 124) est un profilé d'aluminium, en particulier un profilé d'aluminium extrudé, un profilé d'acier ou un profilé de magnésium.

3. Pièce structurelle selon la revendication 1 ou 2,
**caractérisée en ce que**
l'au moins une couche d'aluminium de la structure de couches (8, 42, 62, 82, 102, 122) et/ou de la zone d'ancrage (12, 50, 54, 66, 86, 106, 126) de l'élément de raccordement (10, 42, 44, 46, 64, 84, 104, 124) est dotée d'une couche d'agent d'accrochage, en particulier d'un agent d'accrochage PP, PA ou polyester.

4. Pièce structurelle selon l'une des revendications 1 à 3,
**caractérisée en ce que**
la structure de couches (8, 42, 62, 82, 102, 122) présente au moins deux couches de fibres (6) et que la zone d'ancrage (12, 50, 54, 66, 86, 106, 126) de l'élément de raccordement (10, 42, 44, 46, 64, 84, 104, 124) est enchâssée entre deux couches de fibres (6) .

5. Pièce structurelle selon l'une des revendications 1 à 4,
**caractérisée en ce que**
l'au moins une couche de fibres (6) présente respectivement une porosité d'au moins 75 % au moins par tronçons.

6. Pièce structurelle selon l'une des revendications 1 à 5,
**caractérisée en ce que**
la zone de raccordement (14, 48, 52, 68, 88, 48, 68, 88, 108, 128) de l'élément de raccordement (10, 42, 44, 46, 64, 84, 104, 124) présente un profilé en demi-coque, sachant que le profilé en demi-coque présente de préférence des zones de liaison (72) qui sont conçues pour relier le profilé en demi-coque à un second profilé en demi-coque en un profilé creux.

7. Pièce structurelle selon l'une des revendications 1 à 6,
**caractérisée en ce que**
l'élément de raccordement (10, 42, 44, 46, 64, 84, 104, 124) présente sur deux côtés de la zone de raccordement (14, 48, 52, 68, 88, 48, 68, 88, 108, 128), de préférence sur deux côtés opposés, une zone d'ancrage plate respective (12, 50, 54, 66, 86, 106, 126) qui est enchâssée entre deux couches respectives (4, 6) de la structure de couches (8, 42, 62, 82, 102, 122).

8. Pièce structurelle selon l'une des revendications 1 à 7,
**caractérisée en ce que**
la pièce structurelle multicouches (16, 26, 40, 60, 80, 100, 120) comprend un profilé creux disposé au moins partiellement hors de la structure de couches (8, 42, 62, 82, 102, 122), dans lequel au moins une ligne d'énergie, de fluide ou de signal est disposée.

9. Système comprenant
- une pièce structurelle (16, 26, 40, 60, 80, 100, 120) selon l'une des revendications 1 à 8,
- une pièce supplémentaire (70, 80, 90, 110, 132),
- dans lequel les zones de raccordement (14, 48, 52, 68, 88, 48, 68, 88, 108, 128) de la pièce structurelle (16, 26, 40, 60, 80, 100, 120) et de la pièce supplémentaire (70, 80, 90, 110, 132) sont ainsi conçues que la pièce (70, 80, 90, 110, 132) peut être reliée à la zone de raccordement (14, 48, 52, 68, 88, 48, 68, 88, 108, 128) de la pièce structurelle (16, 26, 40, 60, 80, 100, 120).

10. Procédé destiné à la fabrication d'une pièce structurelle (16, 26, 40, 60, 80, 100, 120) selon l'une des revendications 1 à 8,
- dans lequel les couches (4, 6) de la structure de couches (8, 42, 62, 82, 102, 122) et l'élément de raccordement (10, 42, 44, 46, 64, 84, 104, 124) sont disposés les uns sur les autres dans le sens d'empilement dans un outil de moulage (2, 22), que la zone d'ancrage (12, 50, 54, 66, 86, 106, 126) de l'élément de raccordement (10, 42, 44, 46, 64, 84, 104, 124) est enchâssée entre deux couches (4, 6) de la structure de couches (8, 42, 62, 82, 102, 122) voisines dans le sens d'empilement, en particulier entre deux couches de fibres (6), et
- dans lequel les couches (4, 6) et l'élément de raccordement (10, 42, 44, 46, 64, 84, 104, 124) sont comprimées à chaud en une pièce structurelle (16, 26, 40, 60, 80, 100, 120) au moins dans la zone d'ancrage (12, 50, 54, 66, 86, 106, 126).

11. Procédé selon la revendication 10,
**caractérisé en ce que**
au moins une couche de fibres (6) de la structure de couches (8, 42, 62, 82, 102, 122) sous forme d'un gâteau de fibres est disposée dans l'outil de moulage (2, 22), sachant que le gâteau de fibres comprend des fibres anorganiques et des fibres en plastique thermoplastique.

12. Procédé selon la revendication 10 ou 11,
**caractérisé en ce que**
la pièce structurelle (16, 26, 40, 60, 80, 100, 120) est ainsi chauffée après le pressage à chaud que l'épaisseur d'au moins une couche de fibres (6) croît au moins par tronçons.

13. Procédé selon l'une des revendications 10 à 12,
**caractérisé en ce qu'**
au moins une couche (4, 6) de la structure de couches (8, 42, 62, 82, 102, 122) est préformée dans un outil de pré-moulage avant d'être disposée dans l'outil de moulage (2, 22).

14. Procédé selon l'une des revendications 10 à 13,
**caractérisé en ce que**
- les couches (4, 6) de la structure de couches (8, 42, 62, 82, 102, 122) sont disposées à l'état non pressé dans l'outil de moulage (2, 22),
- que les couches (4, 6) sont pressées à chaud en une pièce structurelle (16, 26, 40, 60, 80, 100, 120) dans l'outil de moulage (2, 22), sachant que la pièce structurelle (16, 26, 40, 60, 80, 100, 120), rapporté à la géométrie cible de la pièce structurelle (16, 26, 40, 60, 80, 100, 120) présente une épaisseur plus mince au moins par tronçons,
- que l'outil de moulage (2, 22) est réglé à la géométrie cible de la pièce structurelle (16, 26, 40, 60, 80, 100, 120) à fabriquer et
- que la pièce structurelle (16, 26, 40, 60, 80, 100, 120) est ainsi chauffée dans l'outil de moulage (2, 22) que la pièce structurelle (16, 26, 40, 60, 80, 100, 120) adopte la géométrie cible de la pièce structurelle (16, 26, 40, 60, 80, 100, 120) par l'augmentation au moins par tronçons de l'épaisseur d'au moins une couche de fibres (6).

15. Emploi d'une pièce structurelle (16, 26, 40, 60, 80, 100, 120) selon l'une des revendications 1 à 8 ou d'un système selon la revendication 9 en tant qu'élément de construction dans la construction automobile, construction de véhicules ferroviaires, construction navale, construction mécanique, construction aéronautique ou dans le bâtiment.
